# EUROPEAN PATENT APPLICATION

(11) **EP 3 339 717 A1**
(43) Date of publication of application: **27.06.2018**
(21) Application number: 17208840.3
(22) Date of filing: 20.12.2017
(51) Int. Cl.: F17C 13/08

(54) **FLUID STORAGE VESSEL RETENTION SYSTEM, PRESSURISABLE FLUID STORAGE VESSEL PACK APPARATUS, AND METHOD OF FILLING A PLURALITY OF PRESSURISABLE FLUID STORAGE VESSELS**

(30) Priority: 20.12.2016 GB 201621678
(71) Applicant: Linde Aktiengesellschaft, 80331 München (DE)
(72) Inventor: Jackson, Christopher Mark, London, Surrey KT2 6ES (GB)
(74) Representative: Richmond, Sarah

(57) **Abstract**

A fluid storage vessel retention system comprises a housing comprising a plurality of placeholders (502, 504, 506, 508, 514) for receiving a respective plurality of pressurisable fluid storage vessels (510, 512). The plurality of placeholders (502, 504, 506, 508, 514) is arranged in spaced relation with respect to each other.

## Description

The present invention relates to a fluid storage vessel retention system of the type that, for example, is used to hold a plurality of pressurisable fluid vessels together. The present invention also relates to a pressurisable fluid storage vessel pack apparatus of the type that, for example, holds a plurality of pressurisable fluid vessels together. The present invention further relates to a method of filling a plurality of pressurisable fluid storage vessels, the method being of the type that, for example contains a plurality of pressurisable fluid storage vessels together.

In the field of fluid storage and deployment, for example gas stored under pressure, such as liquefied gas, it is known to bundle gas cylinders together. The gas cylinders are filled, at some stage, with gas under pressure. The bundles are sometimes subjected to harsh environments and rough treatment. The gas cylinders, or receptacles, are usually positioned vertically next to each other, in contact, and strapped together.

However, when the side walls of the receptacles touch, this allows no room for expansion of the receptacles when under pressure, particularly but not exclusively so-called Type III and Type IV cylinders. This can lead to removal of paint and/or corrosion of the side walls of the receptacles. Moreover, the lack of expansion room between receptacles can lead to the receptacles sustaining damage, for example cracking or fracturing, from the mechaniscal stress experienced by the receptacles. Additionally, by simply strapping the receptacles together, no protection from physical shocks is provided. Likewise, no elemental protection is provided.

According to a first aspect of the present invention, there is provided a fluid storage vessel retention system comprising: a housing comprising a plurality of placeholders for receiving a respective plurality of pressurisable fluid storage vessels, wherein the plurality of placeholders is arranged in adjacent spaced relation with respect to each other.

The plurality of placeholders may reserve a respective plurality of internal volumes; the plurality of internal volumes may comprise a predetermined spacing therebetween.

The plurality of internal volumes defined may each be substantially cylindrical.

The system may further comprise a fluid conduit network for coupling to the respective plurality of fluid storage vessels. The fluid conduit network may comprise a manifold.

The system may further comprise a counterpart plurality of placeholders arranged in adjacent spaced relation with respect to each other; the counterpart plurality of placeholders may be disposed opposite and in registry with the plurality of placeholders.

The plurality of placeholders may comprise a first placeholder and the counterpart plurality of placeholders may comprise a second placeholder; the first placeholder may be in registry with and axially spaced from the second placeholder for receiving a pressurisable fluid storage vessel of the plurality of pressurisable fluid storage vessels therebetween.

The first placeholder may overlie the second placeholder.

The plurality of placeholders may define a plurality of vessel cells.

The counterpart plurality of placeholders may define a counterpart plurality of vessel cells.

The plurality of vessel cells may be respectively arranged to accommodate a vessel.

The system may further comprise an insert defining the plurality of placeholders. The insert may comprise the plurality of vessel-accommodating cells. The system may further comprise a counterpart insert defining the counterpart plurality of placeholders. The insert may comprise the counterpart plurality of vessel-accommodating cells.

The system may further comprise a common port for drawing fluid therethrough. The common port may be operably coupled to the fluid conduit network.

The fluid may be gas. The gas may be pressurised liquefied gas.

According to a second aspect of the present invention, there is provided a pressurisable fluid vessel pack apparatus comprising the fluid storage vessel retention system as set forth above in relation to the first aspect of the invention and populated with a plurality of pressurisable fluid storage vessels respectively accommodated within the housing in spaced relation with respect to each other by the plurality of placeholders.

According to a third aspect of the present invention, there is provided a method of retaining a plurality of pressurisable fluid storage vessels, the method comprising: accommodating the plurality of pressurisable fluid storage vessels in a housing; maintaining an adjacent spaced relation between the plurality of pressurisable fluid storage vessels by virtue of an internal structure of the housing.

According to a fourth aspect of the invention, there is provided a method of filling a plurality of pressurisable fluid storage vessels, the method comprising containing the plurality of pressurisable fluid storage vessels as set forth above in relation to the third aspect of the invention; and filling a number of the plurality of pressurisable fluid storage vessels via the common port.

It is thus possible to provide a system, apparatus and method that allows for secure mounting of fluid storage vessels, particularly but not exclusively those storing pressurised fluid, thereby accommodating expansion and subsequent contraction of the fluid storage vessels as the pressure within the fluid storage vessel changes, whilst ensuring the secure retention of the vessels. Hence, wear and corrosion to side walls of the fluid storage vessels is obviated or at least mitigated. A degree of physical shock absorption is also provided as well as elemental protection, for example from the weather and other external forces. The system, apparatus and method also benefit from flexibility of the make up of the fluid storage vessels, which can be tailored to suit local requirements, for example the number of fluid storage vessels being contained and/or the size of the vessels can be selected as desired.

At least one embodiment of the invention will now be described, by way of example only, with reference to the drawings, in which:
**Figure 1** is a schematic perspective view of a fluid storage vessel retention system constituting an embodiment of the invention and a transportation support frame;
**Figure 2** is a schematic plan view of the mobile fluid delivery system of Figure 1;
**Figure 3** is a perspective view of part of the fluid storage vessel retention system of Figure 1 in greater detail;
**Figure 4** is a side elevation of the part of the fluid storage system of Figure 3 in use;
**Figure 5** is a schematic diagram of a lower portion of an interior of the fluid storage vessel retention system of Figure 1;
**Figure 6** is cross-sectional view of the fluid storage vessel retention system of Figure 1 through line A-A; and
**Figure 7** is a schematic rear elevation of the fluid storage vessel retention system and the transportation support frame of Figure 1.

Throughout the following description, identical reference numerals will be used to identify like parts.

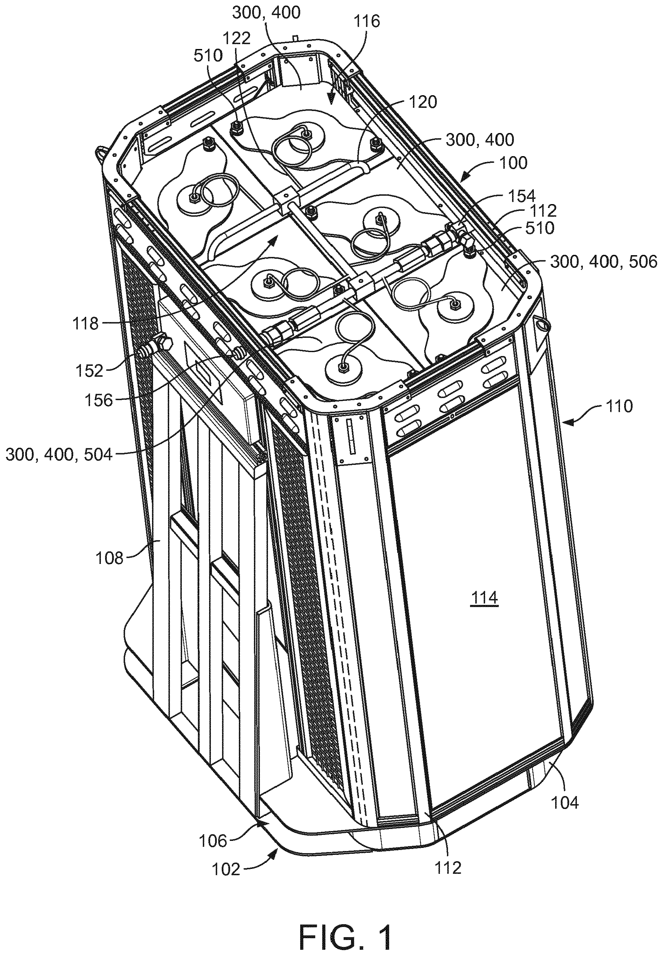

Referring to Figure 1, a fluid storage vessel retention system 100 is disposed on a transportation support frame 102, for example in order to facilitate transportation of the fluid storage vessel retention system 100 using a vehicle, such as a forklift for loading and unloading the fluid storage vessel retention system 100 onto and from a lorry.

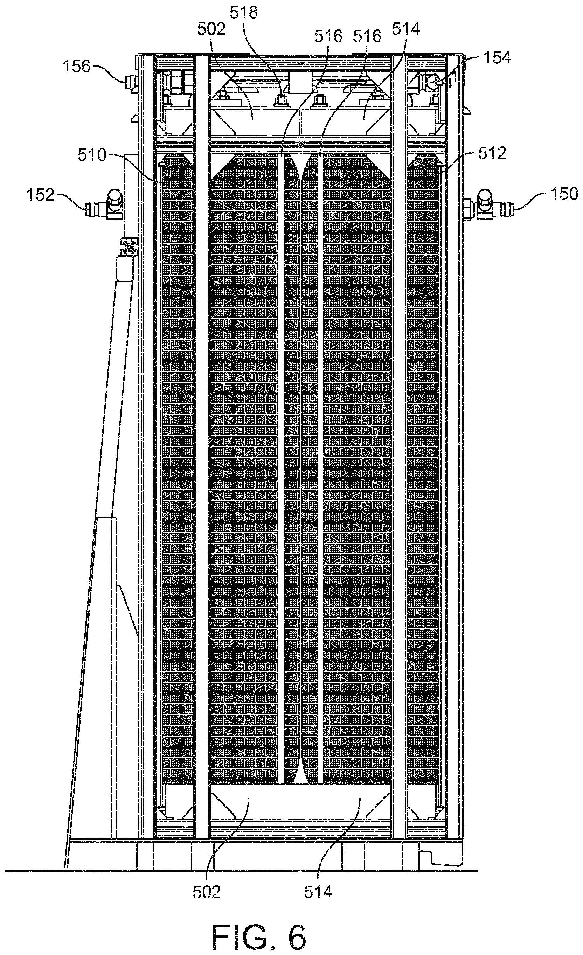

The transportation frame 102 comprises a base portion 104 having conduits or vias 106 (see also Figure 6) therethrough for accommodating the passage of forks therethrough, thereby enabling lifting with a forklift. The transportation frame 102 also comprises an upright portion 108 to support the fluid storage vessel retention system 100 during tilting thereof arising from, for example, lifting of the fluid storage vessel retention system 100 whilst being carried on the transportation support frame 102. The upright portion 108 is connected to the base portion 104, for example by welding, although it is conceivable for the upright portion 108 to be integrally formed with the base portion 104. In this example, the upright portion 108 extends away from the base portion 104 in an off-perpendicular manner, i.e. it is angled off the perpendicular slightly with respect to the base portion 104.

The fluid storage vessel retention system 100 comprises a housing 110 formed, in this example, from a frame 112 completed by filling spaces between upright members of the frame 112 with panels 114 that serve to protect fluid storage vessels contained within the housing 110 from the elements, but also to improve the visual appearance of the fluid storage vessel retention system 100.

At a top end 116 (when in use), a fluid conduit network 118 is provided and comprises a manifold 120 having spur conduits 122 extending therefrom that connect to a valve of a respective fluid storage vessel (not shown in Figure 1). In this example, the housing 110 accommodates six fluid storage vessels. However, the skilled person will appreciate that the housing 110 can be configured to accommodate a greater number of fluid storage vessels or a smaller number of fluid storage vessels than described herein. The fluid storage vessels can contain a pressurised fluid, for example a gas.

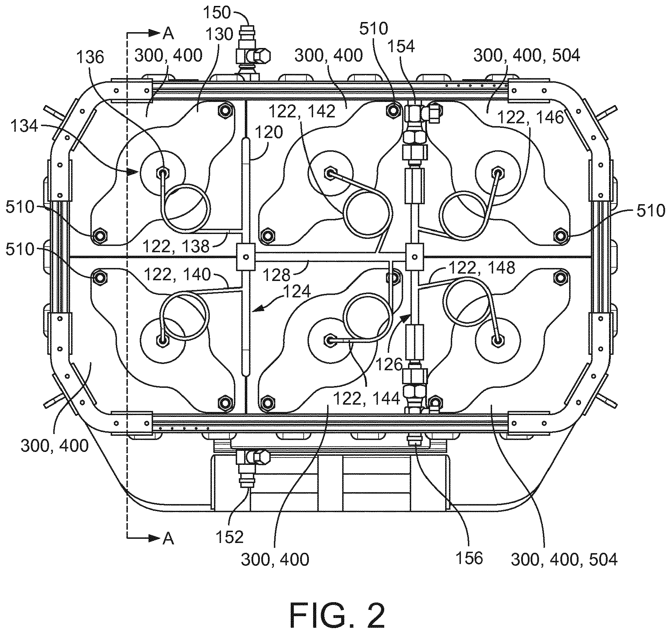

Referring to Figure 2, the manifold 120 has a bridged configuration comprising a first branch 124 and a second branch 126 connected by a bridging portion 128. The manifold 120 has a substantially H-shaped configuration, although other shapes are equally conceivable depending upon application requirements, for example a particular arrangement of the fluid storage vessels in the housing 110. A first half of the first branch 124 has a first spur conduit 138 that is connected to the manifold 120 at a first end thereof and to a first valve port 136 of a first fluid storage vessel (not shown) at a second end thereof. A second spur conduit 140 extends at a first end thereof from a second half of the first branch 124, a third spur conduit 142 and a fourth spur conduit 144 extend at a first end thereof from the bridging portion 128. A fifth spur conduit 146 extends at a first end thereof from a first half of the second branch 126 and a sixth spur conduit 148 extends at a first end thereof from a second half of the second branch 126. The first and second spur conduits 138, 140 are in fluid communication with the first branch 124, the third and fourth spur conduits 142, 144 are in fluid communication with the bridging portion 128 and the fifth and sixth spur portions 146, 148 are in fluid communication with the second branch 126. In common with the first spur conduit 138 mentioned above, second ends of the second, third, fourth, fifth and sixth spur portions 140, 142, 144, 146, 148 are respectively coupled to second, third, fourth, fifth and sixth valve ports of second, third, fourth fifth and sixth fluid storage vessels (not shown in Figure 2).

A first access port 150 is fluidly connected to the first half of the first branch 124 and protrudes from the front of the housing 110, and a second access port 152 is fluidly connected to the second half of the first branch 124 and protrudes from the rear of the housing 110. A third access port 154 is fluidly connected to the first half of the second branch 126 and protrudes from the front of the housing 110, and a fourth access port 156 is fluidly connected to the second half of the second branch 126 and protrudes from the rear of the housing 110.

In this example, the variety of ports are provided on different sides of the housing 110 in order to allow greater flexibility for connection to the fluid storage vessel retention system 100 so that the system, and therefore the bundle of fluid storage vessels contained therein, does not have to be positioned in a specific way. An accessibility benefit is therefore provided as well as flexibility to add additional features, for example valves and regulators. As an additional benefit, multiple ports can be used as fill ports, thereby enabling faster filling. Any of the ports 150, 152, 154, 156 can be used as a common port to access the fluid conduit network.

The housing 110 has an internal structure constructed so as to accommodate the fluid storage vessels in spaced relation therein and so the structure forms reserved volumes or spaces to accommodate individual fluid storage vessels in spaced relation. This is achieved, for example, by providing a plurality of placeholders in the housing 110, such as elastomeric placeholders. The plurality of placeholders is arranged in adjacent spaced relation with respect to each other.

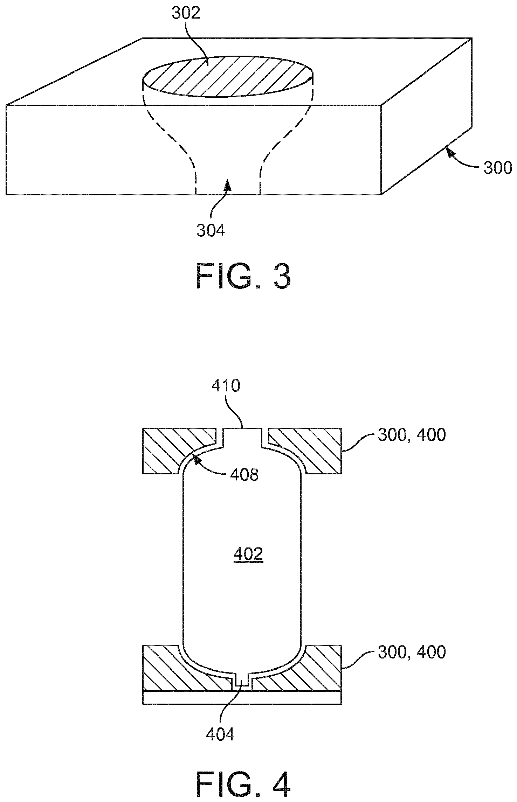

Referring to Figures 3, a placeholder 300 comprises a concave recess 302 for receiving a fluid storage vessel therein. In this example, the placeholder 300 is used both at the top and bottom of the housing 110. The placeholder 300 has an optional substantially central borehole 304 therethrough. Depending upon design of the fluid storage vessel, different designs of placeholder can be used for the top and bottom of the housing 110 in order to accommodate the ends of the fluid storage vessel, respectively. However, in this example, as the fluid storage vessels comprise a protruding neck at both ends thereof, the inserts constituting the placeholder 300 are sited both at the top and bottom of the housing 110. In this regard, and referring to Figure 4, a lower end of the fluid storage vessel 402, when in place, rests on a lower placeholder 300, 400 constituting one of the first placeholder described above, a lower protruding neck 404 of the fluid storage vessel 420 extending into the borehole 304. An upper placeholder 300, 406 constituting one of the second placeholder described above is placed over a shoulder 408 of the fluid storage vessel 402, an upper protruding neck 410 of the fluid storage vessel 402 extending through the borehole 304 of the upper placeholder 406.

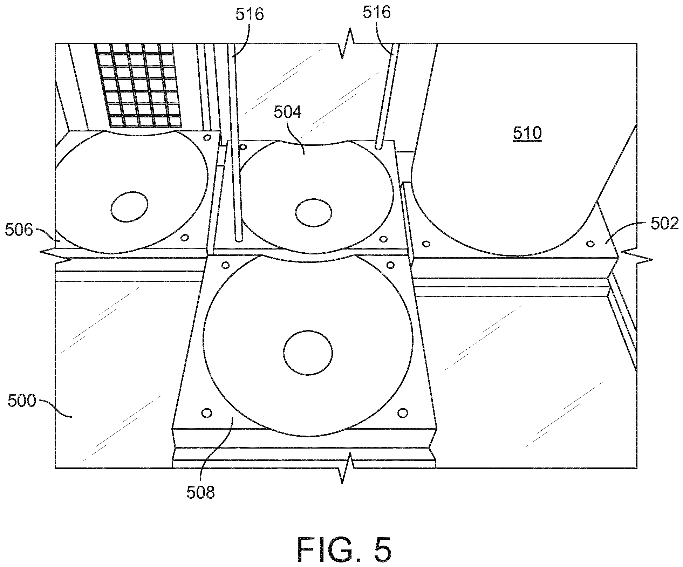

As mentioned above, the plurality of placeholders is installed in the housing 110. In this example, the plurality of placeholders comprises a first number of placeholders and a second, counterpart, number of placeholders, where the first and second number of placeholders are, respectively, two or more. The second number of placeholders is also arranged in adjacent spaced relation with respect to each other. Turning to Figure 5, the housing 110 comprises a base 500 upon which the first number of placeholders is disposed. For the sake of illustration, the lower portion of the housing 110 is shown in a partial state of assembly and comprises a first lower placeholder 502, a second lower placeholder 504 and a third lower placeholder 506 disposed against a back wall of the housing 110, the first lower placeholder 502 being located adjacent the second lower placeholder 504 and the second lower placeholder 504 being disposed adjacent the third lower placeholder 506. A fourth lower placeholder 508 is disposed against a front wall of the housing 110 and adjacent the second lower placeholder 504.

The second counterpart plurality of placeholders is disposed opposite and in registry with the first plurality of placeholders. The plurality of placeholders at each end of the reserved volume therefore abut neighbouring placeholders. In this respect, the plurality of placeholders reserves a respective plurality of internal volumes, the internal volumes comprising a predetermined spacing therebetween. The first plurality of placeholders defines a plurality of vessel cells for receiving an end of a fluid storage vessel, and the second counterpart plurality of placeholders define a plurality of counterpart vessel cells for receiving an end of a fluid storage vessel.

In this example, a first internal volume, for example a substantially cylindrical volume, is reserved, in part, by the first lower placeholder 502 and a first upper counterpart placeholder (not shown) disposed opposite the first lower placeholder 502 in an axially spaced relation (with respect to the volume being reserved). As such, the first upper placeholder overlies the first lower placeholder 502. When in situ, a fluid storage vessel 510 is sandwiched between the first lower placeholder 502 and the first upper placeholders so that the fluid storage vessel occupies the first internal volume reserved. Second, third, fourth, fifth and sixth internal volumes are also reserved by the first number of placeholders and the second number of placeholders in the housing 110 in a like manner to that described above in relation to the first internal volume, and so for the sake of conciseness of description, the manner of accommodation of the plurality of fluid storage vessels in respect of each of the second, third, fourth, fifth and sixth internal volumes will not be described in further detail herein.

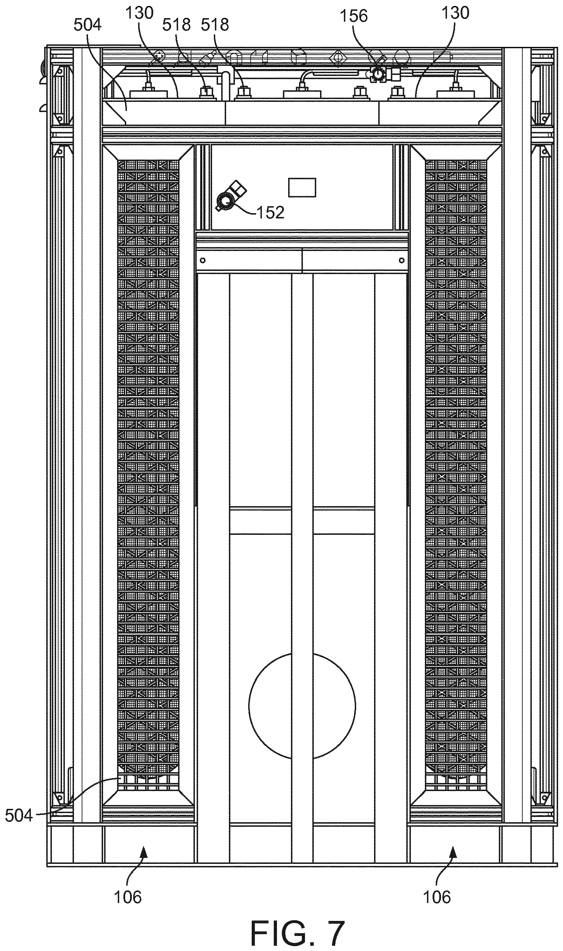

Turning to Figures 6 and 7, the first number of lower placeholders are installed in the housing 110, for example as described above in relation to Figure 5, and the fluid storage vessels are, in this example, craned into position so as to rest on the lower placeholders. The upper placeholders are then placed over the tops of the fluid storage vessels so that, when installed, the fluid storage vessels, for example the first fluid storage vessel 510 and a second fluid storage vessel 512 extend between a first opposing pair of placeholders 502 and a second opposing pair of placeholders 514, respectively, in the manner described above in relation to Figures 3, 4 and 5. A pair of steel guide rods 516 (also partially shown in Figure 5) are then inserted to extend substantially longitudinally and parallel with the exterior of each fluid storage vessel and are secured in place by placing a top cap 130 (Figure 2) over the ends of the steel guide rods 516 and securing bolts 518 to respective threaded ends of each of the pair of steel guide rods 516, thereby maintaining the top cap 130 in place. In this regard, the top cap 130 serves to maintain separation between the steel guide rods 516, which also serve to lock the fluid storage vessels in place. Of course, the skilled person should appreciate that any other securement technique can be employed.

The upper protruding neck 410 of each fluid storage vessel, in this example, provides a port for attachment of a valve to control filling and draw down with respect to the fluid stored by the fluid storage vessel. The valves are connected to the manifold 120. In order to accommodate this connection, the top can 130 comprises an aperture 134 to permit access to a vessel valve port 136 of an associated storage vessel.

In order to draw down from the plurality of fluid storage vessels, any suitable apparatus that requires fluid from the plurality of fluid storage vessels is connected to one of the ports 150, 152, 154, 156 of the fluid storage vessel retention system 100 via a suitable conduit. Similarly, any suitable source of fluid can be connected to a common port 150, 152, 154, 156 of the fluid storage vessel retention system 100 in order to fill the plurality of fluid storage vessels. Balance of draw down and filling is achieved by suitable configuration of the manifold 120.

The skilled person should appreciate that the above-described implementations are merely examples of the various implementations that are conceivable within the scope of the appended claims. Indeed, the gas employed can be hydrogen gas. However, a mixture of gases can be carried by the system 100 with different module apparatus containing different gases, for example hydrogen gas and oxygen gas. The system 100 can be used to form packs of pressurised fluid vessels.

## Claims

1. A fluid storage vessel retention system comprising:
a housing comprising a plurality of placeholders for receiving a respective plurality of pressurisable fluid storage vessels, wherein the plurality of placeholders is arranged in adjacent spaced relation with respect to each other.

2. A system as claimed in Claim 1, wherein the plurality of placeholders reserves a respective plurality of internal volumes, the plurality of internal volumes comprising a predetermined spacing therebetween.

3. A system as claimed in Claim 1 or Claim 2, wherein the plurality of internal volumes defined is each substantially cylindrical.

4. A system as claimed in any one of the preceding claims, further comprising a fluid conduit network for coupling to the respective plurality of fluid storage vessels.

5. A system as claimed in Claim 4, wherein the fluid conduit network comprises a manifold.

6. A system as claimed in any one of the preceding claims, further comprising a counterpart plurality of placeholders arranged in adjacent spaced relation with respect to each other, the counterpart plurality of placeholders being disposed opposite and in registry with the plurality of placeholders.

7. A system as claimed in Claim 6, wherein the plurality of placeholders comprises a first placeholder and the counterpart plurality of placeholders comprises a second placeholder, the first placeholder being in registry with and axially spaced from the second placeholder for receiving a pressurisable fluid storage vessel of the plurality of pressurisable fluid storage vessels therebetween.

8. A system as claimed in any one of the preceding claims, wherein the plurality of placeholders defines a plurality of vessel cells.

9. A system as claimed in Claim 8, wherein the plurality of vessel cells is respectively arranged to accommodate a vessel.

10. A system as claimed in any one of the preceding claims, further comprising an insert defining the plurality of placeholders.

11. A system as claimed in any one of the preceding claims, further comprising a counterpart insert defining the counterpart plurality of placeholders.

12. A system as claimed in any one of the preceding claims, further comprising a common port for drawing fluid therethrough.

13. A pressurisable fluid vessel pack apparatus comprising the fluid storage vessel retention system as claimed in any one of the preceding claims and populated with a plurality of pressurisable fluid storage vessels respectively accommodated within the housing in spaced relation with respect to each other by the plurality of placeholders.

14. A method of retaining a plurality of pressurisable fluid storage vessels, the method comprising:
accommodating the plurality of pressurisable fluid storage vessels in a housing;
maintaining an adjacent spaced relation between the plurality of pressurisable fluid storage vessels by virtue of an internal structure of the housing.

15. A method of filling a plurality of pressurisable fluid storage vessels, the method comprising:
containing the plurality of pressurisable fluid storage vessels as claimed in Claim 13 when dependent upon Claim 12; and
filling a number of the plurality of pressurisable fluid storage vessels via the common port.
